# EUROPEAN PATENT APPLICATION

(11) **EP 4 592 700 A1**
(43) Date of publication of application: **30.07.2025**
(21) Application number: 24153465.0
(22) Date of filing: 23.01.2024
(51) Int. Cl.: G01S 5/00, G01S 5/02, G01S 5/12

(54) **A METHOD FOR PROVIDING AN ABSOLUTE POSITION OF A TARGET DEVICE**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

The invention relates to a method (100) for providing an absolute position of a target device (20), comprising the following steps at a device (10):
- Receiving (101) a request to locate a target device (20),
- Determining (102) at least one located anchor device (30) based on an analysis of one and/or a plurality of located anchor devices (30) being capable to provide an absolute positioning information with regard to the target device (20), wherein the one and/or the plurality of located anchor devices (30) serve as a reference point for locating the target device (20),
- Sending (103) a request to the determined at least one located anchor device (30), wherein the request comprises a task to initiate a positioning procedure by sending a positioning reference signal to the target device (20),
- Receiving (104) a positioning information report from the at least one anchor device (30) based on the initiated positioning procedure, wherein the positioning information report comprises a mobility awareness information with regard to the target device (20),
- Identifying (105) two candidate positions (40, 41) based on a computation depending on the received mobility awareness information,
- Selecting (106) one of the two candidate positions (40, 41) depending on a result of a comparison of angle of arrival measurements in relation to the target device (20),
- Providing (107) the selected one candidate position as the absolute position of the target device (20) to the requesting entity.

## Description

The invention relates to a method for providing an absolute position of a target device. Furthermore, the invention relates to a device, a target device, computer program, and a storage medium for this purpose.

### State of the art

In 3GPP TR 23.700, multiple solutions for ranging in coverage, partial coverage or out of coverage are described. For example, in an out of coverage mode, a user equipment (UE) may be responsible for coordinating a positioning process. Even if a so called anchor UE is involved in the Sidelink positioning process and can perform ranging and angle of arrival measurements, the responsible coordinating UE may miss information to be able to provide an absolute position for the targeted UE. The responsible UE can receive the relative positioning reports from the anchor UE with respect to the targeted UE. With only ranging and angle of arrival information in the report the positioning in absolute coordinates would disadvantageously not be possible. Therefore, the prior art does not provide a technical solution, which allows to combine absolute and relative positions.

### Disclosure of the invention

The above object is solved by a method with the features of claim 1, a Server device with the features of claim 12, a Target device with the features of claim 13, a computer program with the features of claim 14 and a computer-readable storage medium with the features of claim 15. Further features and details of the invention are disclosed in the respective dependent claims, the description, and the drawings. Features and details described in the context to the method according to the invention also corresponds to the computer program according to the invention, the network element according to the invention as well as the computer-readable storage medium according to the invention, and vice versa in each case so that with respect to the disclosure concerning the individual aspects of the invention reference can always be made mutually.

The object is particularly solved by a method for providing an absolute position of a target device comprising the following steps at a device, preferably a server device or server UE:
- Receiving a request to locate a target device,
- Determining at least one located anchor device based on an analysis of one and/or a plurality of located anchor devices being capable to provide an absolute positioning information with regard to the target device, wherein the one and/or the plurality of located anchor devices serve as a reference point for locating the target device,
- Sending a request to the determined at least one located anchor device,
   wherein the request comprises a task to initiate a positioning procedure by sending a positioning reference signal to the target device,
- Receiving a positioning information report from the at least one anchor device based on the initiated positioning procedure, wherein the positioning information report comprises a mobility awareness information with regard to the target device,
- Identifying two candidate positions based on a computation depending on the received mobility awareness information,
- Selecting one of the two candidate positions depending on a result of a comparison of angle of arrival measurements in relation to the target device,
- Providing the selected one candidate position as the absolute position of the target device to the requesting entity.

This has the advantage that the inventive method provides an absolute position in combination with relative positioning information. Further, using of an absolute position of at least one located anchor device, such as for example a road site unit (RSU), advantageously allows a transformation of relative positioning information into absolute positioning information such as an absolute position of a target device Furthermore, using the inventive method according to embodiments of the invention can be advantageous in a use case such as a rail network as a transportation network.

In the context of this invention a positioning procedure can comprise sensing or ranging or any other location based service. Sensing can be understood as detecting other radio transmissions in the environment to avoid interference, while ranging can be about measuring the distance between a device and a base station for optimizing communication parameters.

In the context of positioning in wireless communication systems like 5G NR (New Radio), PRS stands for Positioning Reference Signal. The PRS is a signal, which can support an accurate location determination for a device or a User Equipment (UE). Usage of a PRS signal can work for example as follows:
A base station can transmit a PRS signal on specific time-frequency resources within its cell. These resources are allocated for positioning purposes. The devices or UEs within the cell receive this PRS signal and measure their characteristics, such as signal strength and time of arrival. Then, the device can calculate its position device based on the measurements of the PRS signal from the base station using techniques like Time Difference of Arrival (TDOA) or Angle of Arrival (AoA) depending on the available information. After processing the received PRS signal the device UE can determine its position with relatively high accuracy, which can be used for location-based services, emergency services, asset tracking, and other applications.

In the context of positioning, a mobility awareness information refers to data and information that provide insights into the mobility and movement characteristics of a device or a User Equipment (UE) within a wireless communication network, such as a 5G NR (New Radio) network. Mobility awareness information can be a set of data and parameters that describe the mobility and movement behaviour of a device for example in a wireless network. It can be used to enhance the accuracy of positioning, track the movement of (target) devices, and optimize the network's resources for location-based services. It may comprise several elements such as for example speed and velocity of a device, which can be useful for predicting the UE's future position and optimizing tracking algorithms. Or such as a direction of a movement, which means the angle or heading at which the device is moving. Or such as Trajectory History, which can comprise historical data on the device's movement over time, allowing for more accurate predictions of its future location. Or such as environmental context, which can be Information about the physical environment, such as terrain, obstacles, and buildings, which can affect the device's movement and signal propagation. Device or User Equipment in the context of this invention refers to a device, such as a smartphone, tablet, or any other device that can communicate over a cellular network. The device can play various roles in different communication scenarios.

Anchor device or anchor UE can be understood as a device or user equipment that serves as a reference point or anchor for a positioning procedure.

Target device or target user equipment can be interpreted as a device or a user equipment that is the recipient or target of a positioning procedure.

Server device or server user equipment can be understood as a device or user equipment that is the initiator or coordinator of a positioning procedure.

It is a possibility that the mobility awareness information comprises a trajectory information comprising way points associated with a timestamp information for the target device.

It is conceivable that the target device has indicated the availability of a past and an estimated future trajectory information, wherein the method comprises the further following steps:
- Requesting the past and the future estimated trajectory information from the target device,
- Receiving the requested trajectory information for the computation.

This has the advantage of improving the determining of the path information based on the historical and future trajectory information such as for example waypoints and related time stamps.

It is possible that the target device is only capable of providing a coarse positioning information, wherein the device comprises a digital model of a transportation network, wherein the digital model specifies an assignment and/or a location identifier for elements of the transportation network, wherein the method comprises the further following steps:
- Receiving an actual location identifier from the target device based on a request from the device,
- Transforming the location identifier into a trajectory information based on utilizing the digital model and based on the received location identifier,
- Providing the trajectory information for identifying and/or selecting the one of the two candidate positions.

It is further possible that the method comprises the further following steps:
- Receiving an actual location identifier based on a regular broadcasting of the target device,
- Initiate a ranging procedure on the target device based on the received actual identifier and based on leveraging a corresponding timestamp information.

The actual identifier allows the server device to transform this information into a positioning information based on the digital model, which specifies the assigning of identifier information to a location or position in relation to the digital model of the transportation network such as for example a road network or a railway network.

It is possible that the identifying comprises the further following step:
- Determining two candidate positions based on a range between the selected at least one located anchor device and the target device cross-referenced with a respective path information and timestamp information.

It is possible that the respective path information comprises information in relation to a multi lane path, and/or further comprises a lane information with respect to the multi lane path.

This allows to utilize the inventive method flexibly in a multi lane situation. The provided lane information advantageously improves the obtaining of the exact lane position of the target device on the multilane road.

It is further possible that the determining of at least one located anchor device comprises the further following step:
- Determining at least two located anchor devices based on the analysis of the plurality of located anchor devices each being capable to provide the absolute positioning information with regard to the target device, to increase the accuracy of the absolute positioning.

This has the effect to obtain additional positioning information from further anchor devices, which advantageously supports the determination of the absolute position of the target device.

It is a possibility that the computation further comprises an error measurement using a statistical error propagation.

This advantageously effects the correctness and accuracy of the computation because possible errors are considered and eliminated to improve the position accuracy.

It is conceivable that the method comprises the following step:
- Receiving a request to locate multiple and/or a group of target devices.

This allows to advantageously determine an absolute position dynamically and efficiently for each device of the multiple devices or group of devices at the same time in a dynamic manner, which can be advantageous for example in multilane or road intersection scenarios.

It is further possible that the sending of the request further comprises a task to initiate a positioning procedure between the determined at least one located anchor device and the target device by fast-tracking the target device on Frequency Range 2.

This has the effect to speed up and precise the positioning procedure for tracking the location of the target device by using mmWave frequencies (FR2). Frequency Range 2 (FR2) of 5G NR (New Radio) corresponds to mmWave (millimetre-wave) frequencies, typically ranging from 24 GHz to 100 GHz, and is known for its high-frequency and short-wavelength characteristics. Fast-tracking allows to update the (target) device's location quickly and with low latency. Fast-tracking techniques have the advantage of improving the positioning accuracy by reducing the time between location updates. This is particularly advantageous for applications like autonomous vehicles, where real-time and precise positioning is essential for safe operation.

In another aspect of the invention a device for providing an absolute positioning information of a location, in particular a Server User Equipment, may be provided comprising means for carrying out the inventive method. Thus, the device according to the invention can have the same advantages as have been described in detail with reference to a method according to the invention.

In another aspect of the invention a target device may be provided, which comprises means for carrying out at least one of the following steps:
- Sending an actual location identifier to a device according to the invention based on a request from the device,
- Sending an actual location identifier based on a regular broadcasting to the device according to the invention.

Thus, the target device according to the invention can have the same advantages as have been described in detail with reference to a method according to the invention.

In another aspect of the invention, a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method.

Further advantages, features and details of the invention will be apparent from the following description, in which embodiments of the invention are described in detail with reference to the drawings. In this context, the features mentioned in the claims and in the description may each be essential to the invention individually or in any combination. Showing:
Fig. 1: A method, a device, computer program, and a storage medium according to embodiments of the invention,
Fig. 2 A schematic diagram according to embodiments of the invention, and
Fig. 3 A further schematic diagram according to embodiments of the invention.

The core of the invention relates to the usage of an absolute position of one anchor UE, called located anchor UE, preferably a fixed one such as a road site unit (RSU), and the knowledge of the road network on which a target UE is moving on a path such as for example a railway, a road, a multi lane road or similar to transform relative positions to an absolute position.

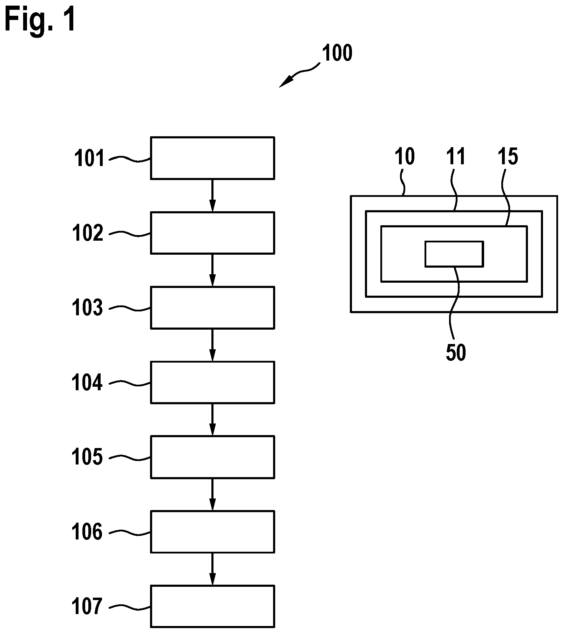

Fig. 1 depicts a method 100, a server UE 10, a computer program 30, a storage medium 15 and a computer 11 according to embodiments of the invention. Fig. 1 shows a method 100 for providing an absolute position of a target device 20. The method 100 according to embodiments of the invention comprises the following steps, which are carried out at a device 10, in particular a Server UE 10:
In step 101 a request is received by the device 10 to locate a target device 20. In step 102 at least one located anchor device 30 is determined based on an analysis of one and/or a plurality of located anchor devices 30 being capable to provide an absolute positioning information with regard to the target device 20.

The one and/or the plurality of located anchor devices 30 serve as a reference point for locating the target device 20. At step 103 a request is sent to the determined at least one located anchor device 30. The request comprises a task to initiate a positioning procedure by sending a positioning reference signal to the target device 20. In step 104 a positioning information report from the at least one anchor device 30 is received based on the initiated positioning procedure. The positioning information report comprises a mobility awareness information with regard to the target device 20. Then, in step 105 two candidate positions are identified 40, 41 based on a computation depending on the received mobility awareness information. At step 106 one of the two candidate positions 40, 41 is selected depending on a result of a comparison of angle of arrival measurements in relation to the target device 20. In step 107 the selected one candidate position is provided as the absolute position of the target device 20 to the requesting entity.

Fig. 1 further shows a device 10, which comprises a computer 11 and a computer-readable storage medium 15. The computer-readable storage medium 15 comprises a computer program 50.

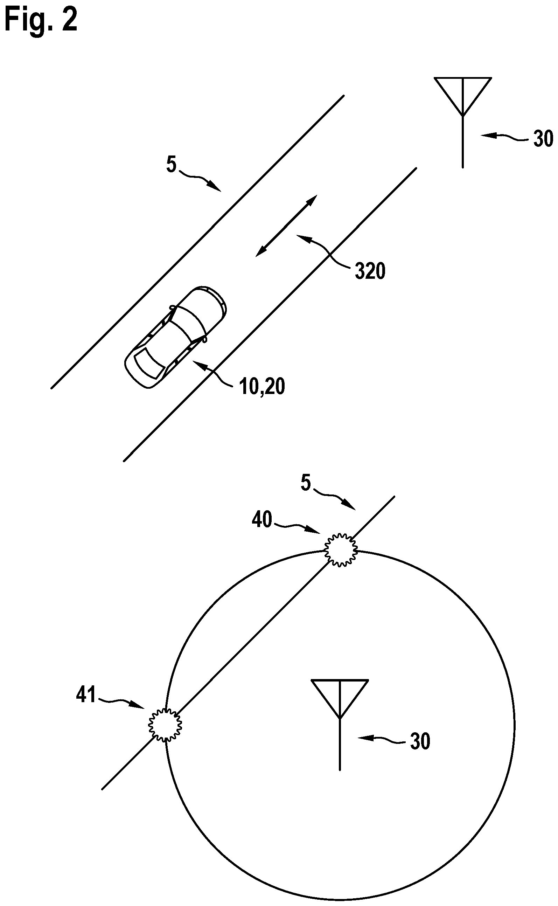

Fig. 2 shows two schematic diagrams according to embodiments of the invention. In the upper part of Fig. 2 a road 5 is shown. Further this part of Fig. 2 illustrates a server user equipment 10 (server UE) and a target user equipment 20 (target UE) as a vehicle. Furthermore, a located anchor user equipment (anchor UE) is shown. As an example, Fig. 2 depicts a scenario for providing an absolute position of a location of a target UE 20. The target UE 20 is relatively 320 positioned with respect to the located anchor UE 30. The located anchor UE 30 reports the relative positioning information to the server UE 10, which is for example collocated with the target UE 20. Alternatively, the server UE 10 can also be collocated with the anchor UE 30 or even another third party UE (not shown). Based on the known range and known path, the server UE 10 can determine two candidate positions 40, 41 for the target UE 20, which is illustrated in the lower part of Fig. 2. There is then only one candidate that is compatible with the measured angle of arrival. The road 5 or road network is defined as for example a linear road with a path in 2D comprising the way points. A trajectory of the road 5 can be arbitrary such as for example non-linear.

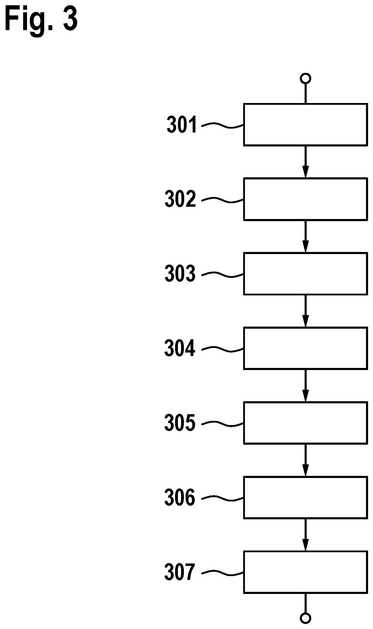

Fig. 3 illustrates a schematic diagram according to embodiments of the invention. As depicted in Fig. 2 the Server UE 10 can be chosen for example by the Target UE 10, if the positioning request is originated form the Target UE 20 or by an application server (AS) if the AS would have requested a positioning service. Fig. 3 particularly depicts a flow diagram of the inventive method according to embodiments of the invention.

In step 301 a positioning request is received by the Server UE 10 to locate one or more Target UEs 20. Then in step 302 the Server UE 10 determines at least one located anchor device 30 based on an analysis of one and/or a plurality of located anchor devices 30 being capable to provide an absolute positioning information with regard to the target device 20, wherein the one and/or the plurality of located anchor devices 30 serve as a reference point for locating the target device 20. The analysis can be either based on a configured list, which comprises possible anchor UEs 30 for determining that one possible anchor UE 30, having an available absolute positioning, or based on using the discovery mechanism of the server UE 10 for analysing all possible anchor UEs 30 and their capabilities to selects the one located anchor UE 30 being available with the absolute positioning.

in step 303 the Server UE 10 can ask the located anchor UE 30 to send a positioning reference signal (PRS) to the Target UE 20. The involved UEs 20, 30 can perform ranging and Angle of Arrival (AoA) measurements. Finally, the anchor U E 30 can send a report to the server U E 10 with regard to the results of the measurements.

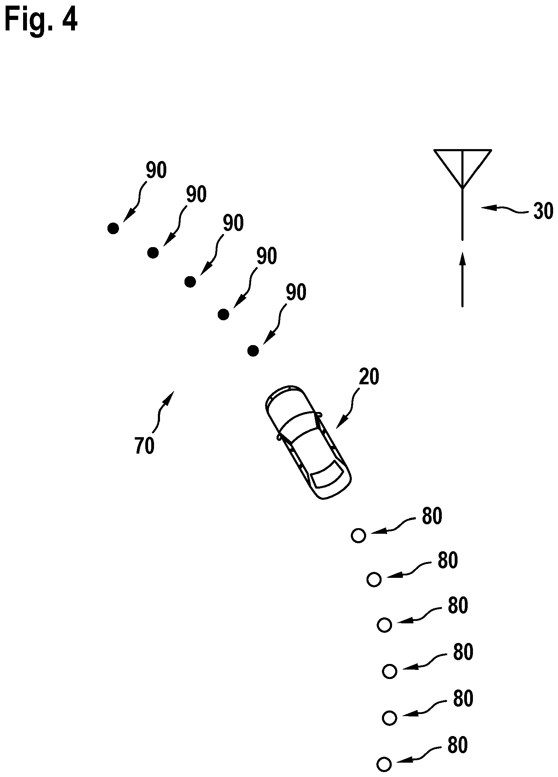

At Step 304 the Server UE 10 can obtain an estimated trajectory 70 comprising waypoints 80, 90 associated with timestamps for the target UE 20 as shown for example in Fig. 4. This can be computed for example as follows:
a. The Target UE 20 has a knowledge of its past trajectory 80 and future estimated trajectory 90 as also illustrated in Fig. 4. The server UE 10 requests the past trajectory 80 and future estimated trajectory 90 from the target UE 20 for the computing process.
b. The target UE 20 can only provide a coarse position like for example a road number, last milestone, an exit number of a motorway or a crossed road. The Target and server UE 10, 20 comprise a digital model of a transportation network such as a road network 5 with identifiers of the road numbers and milestones. The Target UE 20 can provide and send the actual identifier of the road segment to the Server UE 10 for further computing. The Server UE 10 can use its digital model to transform the received road segment identifier into a trajectory 70 and can then quantize it to get waypoints 80, 90 as illustrated for example in Fig. 4.

In step 305 the Server UE can obtain for example two candidate positions from the range between the located anchor UE 30 and the target UE 20 by cross-referencing with the respective path information 70. This can be for example based on the internal calculations of the Server U E 10 and based on the trajectory information and/or mobility awareness information such as timestamp information, speed or heading information.

At step 306 the Server UE 10 can select the only candidate position that is compatible with the angle of arrival measurement and particularly, the timestamp associated with road segment information. In step 307, then the Server UE 10 can provide the absolute position of the target UE 20 to the requesting entity based on the selected candidate.

In another embodiment, the target UE 20 regularly can broadcast the identification of its road segment. This information is then used by the server UE 10 in step304 during a ranging procedure on the same target leveraging the timestamp.

In another embodiment, a fast tracking procedure in frequency range 2 (FR2) between the located UE 30 and the target UE 20 can be used for a sidelink measurement. In such a case the sending of the request from the Server U E10 to the Anchor UE 30 comprises a task to initiate a positioning procedure such as a sidelink measurement by fast-tracking the target device 20 on Frequency Range 2 FR2.

In another embodiment, the calculation or computation by the Server UE can also include an error measurement, using statistical error propagation.

In another embodiment, it is possible that multiple anchor UEs 30 may be involved in the inventive method in order to increase the position accuracy.

The above explanation of the embodiments describes the present invention in the context of examples. Of course, individual features of the embodiments can be freely combined with each other, provided that this is technically reasonable, without leaving the scope of the present invention.

## Claims

1. A method (100) for providing an absolute position of a target device (20), comprising the following steps at a device (10):
- Receiving (101) a request to locate a target device (20),
- Determining (102) at least one located anchor device (30) based on an analysis of one and/or a plurality of located anchor devices (30) being capable to provide an absolute positioning information with regard to the target device (20), wherein the one and/or the plurality of located anchor devices (30) serve as a reference point for locating the target device (20),
- Sending (103) a request to the determined at least one located anchor device (30), wherein the request comprises a task to initiate a positioning procedure by sending a positioning reference signal to the target device (20),
- Receiving (104) a positioning information report from the at least one anchor device (30) based on the initiated positioning procedure, wherein the positioning information report comprises a mobility awareness information with regard to the target device (20),
- Identifying (105) two candidate positions (40, 41) based on a computation depending on the received mobility awareness information,
- Selecting (106) one of the two candidate positions (40, 41) depending on a result of a comparison of angle of arrival measurements in relation to the target device (20),
- Providing (107) the selected one candidate position as the absolute position of the target device (20) to the requesting entity.

2. The method (100) of claim 1,
**characterized in that** the mobility awareness information comprises a trajectory information comprising way points associated with a timestamp information for the target device (20).

3. The method (100) of any one of the preceding claims,
**characterized in that** the target device (20) has indicated the availability of a past and an estimated future trajectory information, wherein the method (100) comprises the further following steps:
- Requesting the past and the future estimated trajectory information from the target device (20),
- Receiving the requested trajectory information for the computation.

4. The method (100) of any one of the preceding claims,
**characterized in that** the target device (20) is only capable of providing a coarse positioning information, wherein the device (10) comprises a digital model of a transportation network, wherein the digital model specifies an assignment and/or a location identifier for elements of the transportation network, wherein the method (100) comprises the further following steps:
- Receiving an actual location identifier from the target device (20) based on a request from the device (10),
- Transforming the location identifier into a trajectory information based on utilizing the digital model and based on the received location identifier,
- Providing the trajectory information for identifying (105) and/or selecting (106) the one of the two candidate positions.

5. The method (100) of any one of the preceding claims,
**characterized in that**, the method comprises the further following steps:
- Receiving an actual location identifier based on a regular broadcasting of the target device (20),
- Initiate a ranging procedure on the target device (20) based on the received actual identifier and based on leveraging a corresponding timestamp information.

6. The method (100) of any one of the preceding claims,
**characterized in that** the identifying (105) comprises the further following step:
- Determining two candidate positions based on a range between the selected at least one located anchor device (30) and the target device (20) cross-referenced with a respective path information and timestamp information.

7. The method (100) of claim 6,
**characterized in that** the respective path information comprises information in relation to a multi lane path, and/or further comprises a lane information with respect to the multi lane path.

8. The method (100) of any one of the preceding claims,
**characterized in that** the determining (102) of at least one located anchor device (30) comprises the further following step:
- Determining at least two located anchor devices (30) based on the analysis of the plurality of located anchor devices each being capable to provide the absolute positioning information with regard to the target device (20), to increase the accuracy of the absolute positioning.

9. The method (100) of any one of the preceding claims,
**characterized in that** the computation further comprises an error measurement using a statistical error propagation.

10. The method (100) of any one of the preceding claims,
**characterized in that** the method (100) comprises the following step:
- Receiving a request to locate multiple and/or a group of target devices (20).

11. The method (100) of any one of the preceding claims,
**characterized in that** the sending (103) of the request further comprises a task to initiate a positioning procedure between the determined at least one located anchor device (30) and the target device (20) by fast-tracking the target device (20) on Frequency Range 2 (FR2).

12. Device (10) for providing an absolute positioning information of a location, in particular a server User Equipment (10), comprising means for carrying out the method (100) of any one of the preceding claims.

13. Target device (20) comprising means for carrying out at least one of the following steps:
- Sending an actual location identifier to a device (10) according to claim 12 based on a request from the device (10),
- Sending an actual location identifier based on a regular broadcasting to the device (10) according to claim 12 .

14. A computer program (50), comprising instructions which, when the computer program (50) is executed by a computer (11) of a device (10), cause the computer (11) to carry out the method (100) of any one of claims 1 to 11.

15. A computer-readable storage medium (15) comprising instructions which, when executed by a computer (11), cause the computer (11) to carry out the steps of the method (100) of any one of claims 1 to 11.
